# EUROPEAN PATENT SPECIFICATION

(11) **EP 0 373 281 B1**
(45) Date of publication and mention of the grant of the patent: **16.02.1994**
(21) Application number: 88850421.4
(22) Date of filing: 13.12.1988
(51) Int. Cl.: G01N 1/20

(54) **Conveyor belt cross-stream sampling method**
Verfahren zur Querschnittprobeentnahme auf einem Förderband
Méthode de prise d'échantillons représentant une section du matériau sur une bande transporteuse

(43) Date of publication of application: 20.06.1990
(73) Proprietor: Long, John B., Louisville Tennessee 37777 (US)
(72) Inventor: Long, John B., Louisville Tennessee 37777 (US)
(74) Representative: Rostovanyi, Peter

(56) References cited:
- EP-A- 0 187 443
- DE-A- 2 545 867
- SOVIET INVENTIONS ILLUSTRATED, week E07, no. B7530, 31st March 1982, Derwent Publications Ltd, London, GB; & SU-A-828 007 (GIPROMASHUGLEBOGAS) 07-05-1981
- SOVIET INVENTIONS ILLUSTRATED, week 84/21, no. 84-132089/21, 4th July 1984, Derwent Publications Ltd, London, GB; & SU-A-1 037 121 (SIBTSVETMETAVTOMATI) 23-08-1983

## Description

This invention relates to improvements in the mechanized sampling of bulk material. Specifically, the invention relates to the cross-stream sampling of bulk material from a conveyor belt, particularly a moving belt.

The invention was developed primarily for use in the incremental collection of samples of coal from a conveyor belt, and it is therefore convenient to describe the same as used for such purposes. Of course, the invention can be used in the sampling of other bulk materials and is not to be construed as limited to the sampling of coal.

Belt conveyors subject to possible mechanical sampling installations include a full range of lengths from short feeder conveyors to overland conveyors spanning thousands of feet. Belt widths may vary from 14 to 96 inches (0,355m to 2,44m). Belt speeds may vary from a slow creep for some feeders to as much as 1000 feet (304,8m) per minute. It is obvious that it would not be practical to intermittently stop a lengthy, high-capacity belt conveyor for sampling purposes. Thus, it would be advantageous to obtain a cross-stream sample increment from a moving conveyor belt.

Mechanized sampling from a moving conveyor has been employed but the results have not been entirely satisfactory. For example, previous sweep samplers have tended to cross the moving belt relatively slowly. In the case of a fast moving belt, the relative speeds of the belt and the sampling mechanism moving across the belt causes the sample to be taken along a line which deviates excessively from a line perpendicular to the belt length. The result is excessive material disturbance and belt spill. Another problem has been that conventional sweeps do not adequately mate with the upper surface of the belt in their movement across the belt which makes it difficult to obtain a full cross-stream increment. This can also result in damage to the belt and/or sampler.

Consequently, known approaches to the mechanized sampling of bulk materials on a conveyor belt have not been effective in removing acceptably representative cross-stream increment samples from a conveyor belt, particularly a moving belt.

It is therefore an object of this invention to provide a sampling method for removing a cross-stream increment of bulk material from a conveyor belt.

Another object of this invention to provide a mechanized sampling method for removing an acceptably representative cross-stream increment of bulk material from a moving conveyor belt.

A further object of the invention is the provision of a sampling method of the character described employing a sample sweep which moves across the belt in mating relationship therewith to obtain a full cross-stream increment and to avoid damage to the belt and/or sweep.

EP-A-0 187 443 discloses a belt conveyor cross-stream sampling system wherein the material to be sampled is first segregated between plate means and thereafter removed from the belt conveyor by sample sweep means. Piston means are connected to these plate and sweep means for rotation thereof about a shaft.

DE-A-2545867 relates to the use of pneumatic or hydraulic double-acting cylinders as slowly running high-torque drives for stationary or mobile apparatuses, such as cranes, winches, screw conveyors, concrete mixers and ski-lifts. The cylinders are connected to cranks attached to the shaft.

Soviet Inventions Illustrated, week E07, No. B5730, 31st March 1982, Dervent Publications Ltd, GB; & SU-A-828007 relates to a bulk material sampling device with a scoop of elastic material sweeping across a troughed conveyor belt at specified speed. The scoop is arranged on a two-armed lever which is carried by a rotatable shaft and which at one end carries the scoop and at the other end a counterweight. A profiled cam on the shaft cooperates with a flow controller to accelerate the scoop from its position of rest smoothly in one direction, then to sweep the scoop accross the material at constant velocity, and then decelerate the scoop as the sample material is discharged in a chute until the scoop stops at the other end of its path of movement.

These and other objects and advantages of the invention will become apparent upon consideration of the following detailed description when considered in conjunction with the accompanying drawings in which:
FIGURE 1 is a somewhat diagrammatic top plan view of a conveyor belt and supporting structure for use in the cross-stream sampling method of the present invention;
FIGURE 2 is a somewhat diagrammatic side view of the conveyor belt of FIGURE 1;
FIGURE 3 is a diagrammatic side elevational view of one form of a sampling apparatus for use with the conveyor belt illustrated in FIGURES 1 and 2;
FIGURE 4 is a diagrammatic top plan view of the sampling apparatus of FIGURE 3;
FIGURES 5a through 5f are diagrammatic views illustrating removal of a cross-stream increment of bulk material from a conveyor in accordance with the invention; and
FIGURES 6a and 6b are diagrammatic illustrations of a valve for use in the sampling apparatus.

Briefly, the present invention includes a method for removing a cross-stream increment of material from an enlongate conveyor belt having drive means for imparting longitudinal movement to the belt at a desired velocity. The method involves the use of a sampler which includes a sample sweep mounted adjacent the belt for rotation about a rotative axis so as to pass through the material on the belt, a pair of cranks connected to the sweep for rotating the sweep about the axis, a double-acting pneumatic cylinder operatively connected to each crank for imparting a force to its associated crank to cause the crank to rotate the sweep, and valve means for alternately pressurizing and venting chambers of each double-acting pneumatic cylinder. In accordance with the method, the sweep is controlled and rotated by pressurizing a selected chamber of each cylinder to provide balancing forces to hold the sweep in a predetermined ready position. Thereafter, selected chambers of the cylinders are alternately pressured and vented to provide forces to rotate the sweep through an arcuate path which passes through the body of material to be sampled to remove the cross-stream increment of material from the belt. Then, selected chambers of the cylinders are pressurized to return the sweep to the ready position. The method is advantageous in that it enables the attainment of very high sample sweep velocities in the order of 180 inches per second or more to facilitate the removal of an acceptably representative sample from a moving conveyor.

In a preferred embodiment, material is ejected from the sweep after it crosses the belt by pressurizing a selected chamber in one of the cylinders momentarily to oppose the force of the chamber in the other cylinder. This causes the sweep to rapidly decelerate and eject the material.

In many cases, the conveyor belt is supported in a trough-like configuration so that portions of its surface are flat and are angled with respect to one another when viewed in cross section. In such a case, it is difficult to remove an acceptably representative cross-stream increment from the belt using a sweep that rotates transversely of the belt. In accordance with one feature of the invention, the method further comprises modulating the normal troughing of the belt and supporting and conforming the belt to the arcuate path of the sweep so that the sweep moves in close proximity to the upper surface of the modulated belt and removes a cross-stream increment from the belt as it moves through its accurate path across the belt, thereby promoting complete removal of material from the belt.

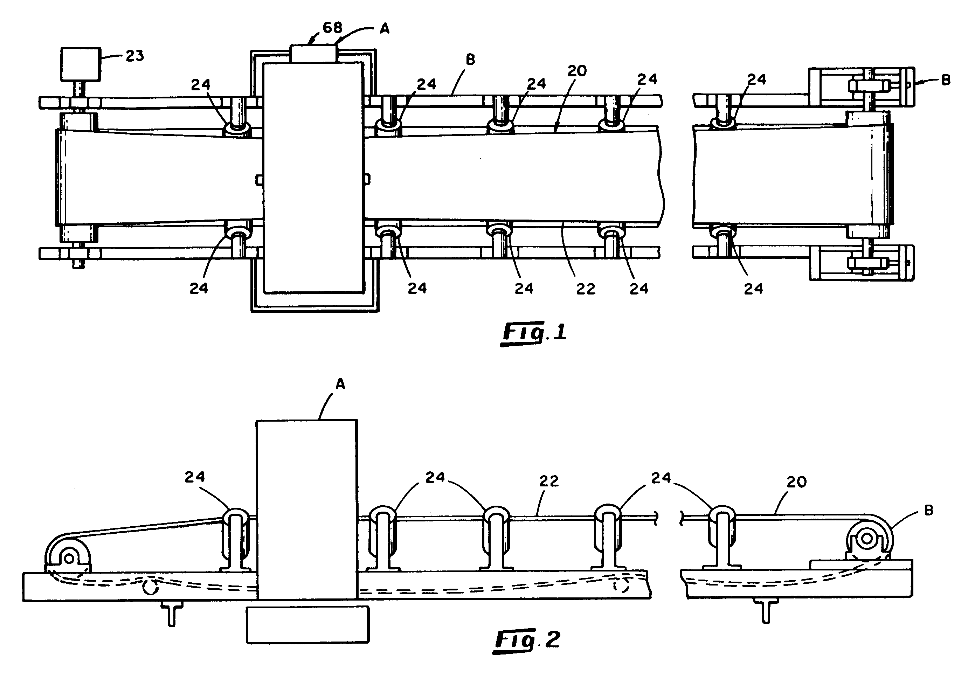

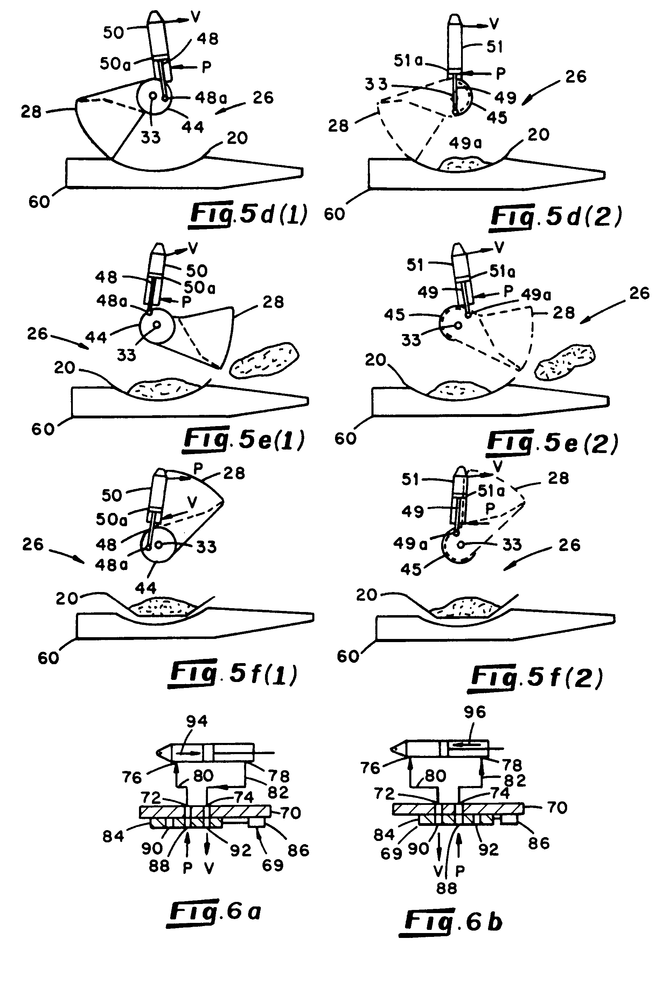

Referring now to the drawings in which like reference characters refer to like or similar parts throughout the several views, FIGURES 1 and 2 illustrate the positioning of a sampling unit A adjacent a belt conveyor B. Generally, the sampling unit A is supported in an operative position over and adjacent to a continuous belt 20 for removing a cross-stream increment from a conveying reach 22 of the belt 20. In a typical installation, a plurality of idlers support the conveying reach 22 of the belt 20 in a transverse trough-like configuration (See FIGURE 6a(2)) so that the reach 22, viewed in cross-section, has angled sides relative its center. The belt 20 is driven by any suitable means such as, for example, a drive motor 23 located adjacent one of its ends.

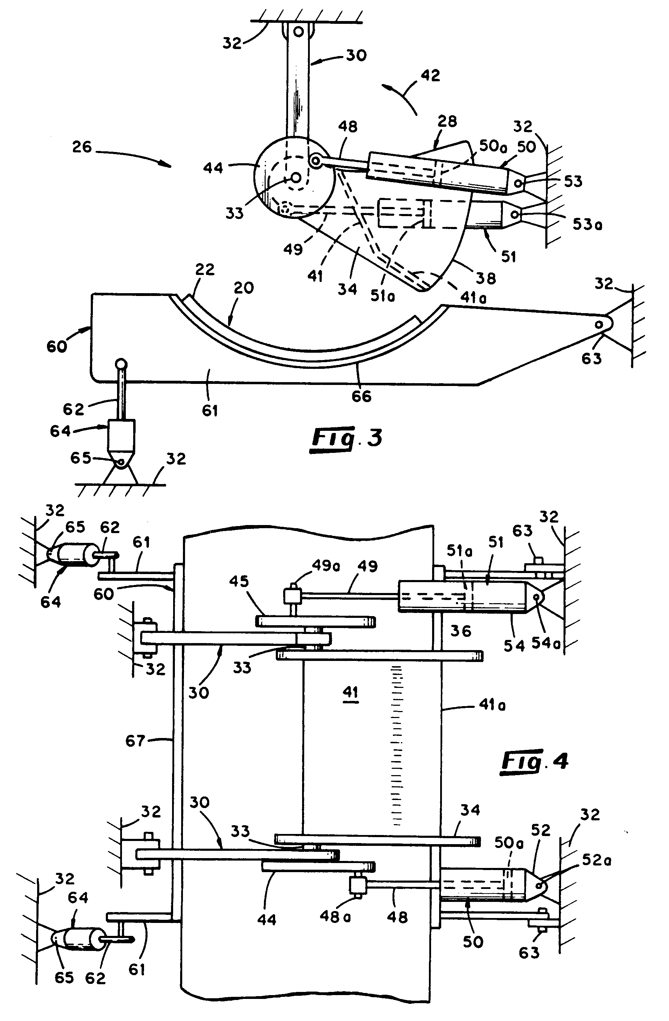

One form of a sampling unit A for use in the invention is illustrated diagrammatically in FIGURES 3 and 4 and includes a sampling apparatus 26 comprising a sampler 28 rotatably mounted on a support 30 fabricated from suitable structural members. Support 30 forms a part of an overall frame structure indicated generally in the drawings at 32 which may be secured to the support structure of the belt conveyor B for supporting the sampler 28 in an operative position adjacent the conveyor. Sampler 28 is preferably fixedly mounted on a shaft 33 which is rotatably mounted on the support 30 over and above the conveying reach 22 and aligned parallel to the line of movement of the belt 20 so that the sampler 28 rotates in a plane that is substantially perpendicular to the direction of movement of the belt.

Sampler 28 may include side or driver plates 34 and 36 each having one end rigidly attached to shaft 33 for rotation therewith. The plates 34 and 36 are spaced apart, preferably a distance of not less than three times the diameter of the largest piece of bulk material being conveyed on the conveying reach 22. The end of each of the plates 34 and 36 is provided with an arcuate edge 38, all portions of which are substantially the same radial distance from the shaft 33. The radially outermost point on the edges 38 defines the extremity of the path of arcuate movement of sampler 28.

In order to sweep material from the belt, a back plate or sweep 41 is fixedly connected between the plates 34 and 36. The sweep 41 includes a radially outermost edge 41a positioned adjacent the arcuate edges 38 of the side plates 34 and 36.

The sweep 41 and the side plates 34 and 36 are preferably arranged so that sampler 28, when viewed in cross-section, is in the shape of an open-ended rectangle. The side plates 34 and 36 thus divide and segregate the cross-stream increment ahead of the sweep 41 as the sampler 28 is rotated across the conveying reach 22.

The sampler 28 is rotated in the direction of the arrow 42 in FIGURE 3 and, in order to eject material from the conveying reach 22, the sweep 41 is preferably configured so that the position of its leading surface 41b is advanced in the direction of rotation of the sampler 28 at progressively radially inward locations on the surface 41b from the outer edge 41a. Consequently, when sampler 28 is rotated, the sweep 41 will impart a force to an increment on the belt which will cause it to be ejected from the sampler 28 as will be hereinafter described.

In order to effect rotation of the shaft 33 and the sampler 28, cranks 44 and 45 are connected to opposite ends of the shaft 33. Each of the cranks 44 and 45 is also connected to one of a pair of double-acting pneumatic cylinders 50 and 51 having pistons 50a and 51a, respectively. Piston rods 48 and 49 of the respective pneumatic cylinders 50 and 51 are connected to pistons 50a and 51a in the usual manner, and are pivotally connected to their related crank 44 or 45 as by the crank pins 48a and 49a. The crank pins 48a and 49a are preferably angularly offset from one another about 40 to about 90 degrees, and most preferably are angularly offset from about 50 to about 75 degrees. Base ends 52 and 54 of the cylinders 50 and 51, respectively, are pivotally connected to the frame as by pivot pins 52a and 54a.

A belt modulator 60 extends transversally of and beneath the conveying reach 22 between a pair of adjacent idler roller sets 24. The modulator 60 is operable to modulate the normal troughing of the belt 20 and support and conform the belt 20 to the arcuate path of the sampler 28 so that the sampler 28 moves in close proximity to the upper surface of the belt. The modulator 60 includes a pair of elongate beams 61 which are pivotally connected at one of their ends as at 63 to the frame 32 and are connected at their other ends to piston rods 62 of pneumatic cylinders 64 which are attached to the frame 32 by pivot pins 65. The beams 61 are longitudinally spaced apart relative to the belt 20 and are oriented substantially perpendicular to belt.

The cylinders 64 are operable to raise and lower the beams 61. Each beam has an arcuate portion 66 on its upper surface that has a radial dimension substantially equal to the radius of the arc circumscribed by the edge 38 of the sampler 28. An arcuate belt-supporting plate 67 spans between the arcuate portions 66 of the beams 61 with its axis substantially parallel to the direction of movement of the belt and has a radial dimension substantially equal to that of the arcuate portions 66.

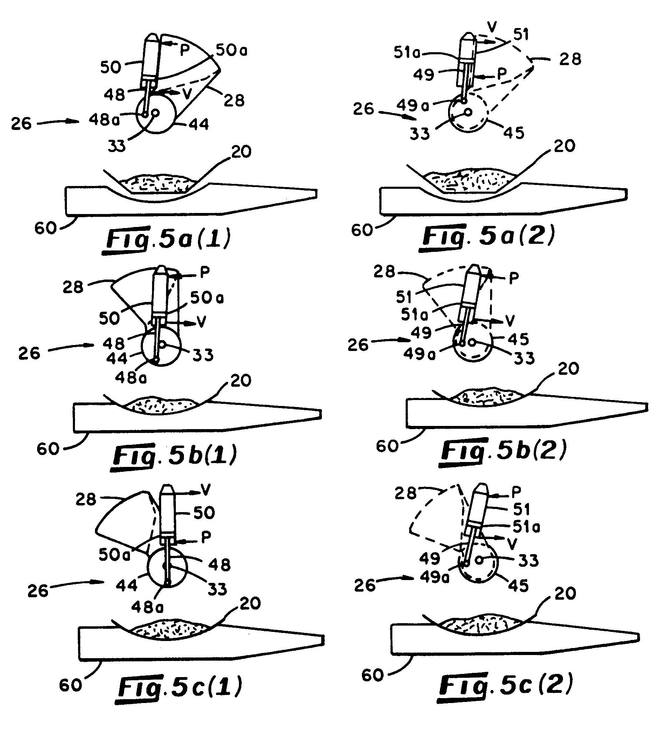

The modulator 60 is normally spaced below the conveying reach 22 and, on actuation of the cylinders 64, is pivoted upwardly against the conveying reach 22 to a raised position to lift and contour the conveying reach 22 so that it has a transverse arcuate configuration which substantially conforms to the radius of the arc as described by the radial extremity of the arcuate edge 38 of the sampler 28 as it moves across the reach 22. The raised position of the modulator 60 presents the upper surface of the reach 22 just below the path of the sampler 28 so that the latter moves in close proximity to the upper surface of the belt. This position of the modulator 60 is illustrated in FIGURE 3 and in FIGURES 5b through 5e to be described subsequently. Thus, the modulator 60 modulates the normal troughing of the conveying reach 22 in a manner to facilitate a clean sweep of sampler 28 across the belt and also serves to support the belt 20 in the area swept by the sampler 28 so as to substantially eliminate the possibility of puncture of the belt 20 by any sharp-edged particles as they are being removed from the reach 22.

Control means 68 (See FIGURE 1) may be mounted on the frame 32 of the sampling apparatus 26 for systematic operation of the sampling unit A; i.e., for sequentially actuating the modulator 60 to lift and contour a portion of the belt 20 to an arcuate configuration which substantially conforms to the radial path of sampler 28; selectively actuating the cylinders 50 and 51 to impart a rotational force on the sampler 28 causing the latter to rotate on the shaft 33 to segregate and remove a cross-stream increment of bulk material from the belt 20; and lowering the modulator 60 to resume normal troughing of the belt 20 on the idlers 24.

Control means 68 are preferably pre-set in accordance with predetermined timing or location as to sample taking, free of selection on a discretionary basis by an operator, and are operative such that the systematic and sequential operation thereof is performed within a very short period of time. As will be described, the sampling apparatus 26 is capable of effectively removing a cross-stream increment of the bulk material while the belt 20 is moving which eliminates the need for surge capacity on the conveyor B upstream of the sampling location.

In order to effectuate selective actuation of the double-acting cylinders 50 and 51, the control means 68 may include a control valve connected to the ports of each cylinder to pressurize one end of the associated cylinder and vent the other. Various commercial valves are readily available for the purpose. Basically, all of the valves operate with a slide or rotary member, operated by an actuator such as a solenoid to control the airflow as desired.

One such valve 69 is shown diagrammatically in FIGURES 6a and 6b. The valve 69 includes a base plate 70 having two ports 72 and 74 which are connected to ports 76 and 78 on the cylinder to be actuated via conduits 80 and 82.

Adjacent the base plate 70 is a slide 84 which is movable in sealing relationship with the base plate from the position shown in FIGURE 6a to the position shown in FIGURE 6b by means of a solenoid 86. The slide 84 is provided with a central port 88 which is connected to a source of pressurized air and which is movable under the action of the solenoid 86 to communicate with either the port 72 or the port 74. Vent ports 90 and 92 are provided in the slide 84 on each side of the central port 88 to communicate with the non-pressurized one of the ports 72 and 74.

In operation, when the slide is in the position shown in FIGURE 6a, pressurized air is admitted to the cylinder through the conduit 80 and the port 76. Simultaneously, port 78 is vented through line 82 and ports 74 and 92. This causes the piston (either piston 50a or 51a) to move in the direction of arrow 94. Actuation of solenoid 86 moves the slide to the position shown in FIGURE 6(b) whereupon port 78 is pressurized and port 76 is vented, thus causing the piston to move in the direction of arrow 96.

Steps involved in the removal of a cross-stream increment from the belt 20 in accordance with the present invention are illustrated in FIGURES 5a-f. The method is illustrated in connection with sampling apparatus 26 and the sampler 28 described above, certain features of which are omitted for the purpose of clarity.

Each of the Figures is directed to the position of the sampler 26 and the cylinders 50 and 51. During various stages of the sampling operation, the Figures followed by the number (1) refer to the position of the upstream cylinder 50 and the Figures followed by the number (2) refer to the position of the downstream cylinder 51. On the drawings, the ports for the cylinders 50 and 51 which are supplied by the cylinder valves 69 to pressurize and vent the chambers of the cylinders adjacent opposite faces of the pistons 50a and 51a are shown diagrammatically by the heavy arrows which are marked with the letters "P" and "V" representing admittance of pressurized air and venting, respectively.

FIGURES 5a(1) and (2) show the two cylinders 50 and 51 and sampler 28 in the rest position. In that position, cylinder 50 has its base port pressurized and its rod end port vented with the piston 50a of the cylinder 50 being ahead of dead center. The cylinder 51 has its rod end pressurized and its base end vented with its piston 51a being approximately mid-way between the ends of the cylinder 51. In this position, the forces exerted by the cylinders 50 and 51 are balanced and the sampler 28 is stationary above the belt 20.

Referring now to FIGURES 5b(1) and (2), the modulator 60 is raised to contour the belt 20 into an arcuate configuration as described above and the valve controlling the downstream cylinder 51 is actuated to pressurize the base end of cylinder 51 and to vent the rod end. At this point, the sampler 28 is rotated by the dual action of the two cylinders 50 and 51 working together to cause rapid acceleration.

At about the time the crank pin 48a of cylinder 50 reaches dead center, the valve controlling cylinder 50 is actuated to pressurize the rod end of cylinder 50 and to vent the base end. The position of both cylinders 50 and 51 is shown in FIGURES 5c(1) and 5c(2). This causes the sampler 28 to again be accelerated by the two cylinders simultaneously.

At about the time the crank pin 49a of cylinder 51 reaches dead center, the valve controlling that cylinder is actuated to cause pressurized air to be applied to the port at the rod end of the cylinder 51 and to vent the port at the base end. This condition is shown in FIGURES 5d(1) and (2). Again, as the sampler 28 is passing across the belt 20, it is being powered by both cylinders.

As the sampler 28 leaves the belt 20 and ejects the sample as shown in FIGURE 5e(1) and (2), the pin 48a of the cylinder 50 has passed dead center so that the cylinder 50 opposes the action of the cylinder 51 causing rapid deceleration of the sampler 28. As a result, sampler 28 ejects the sample increment at a predetermined trajectory. The valve controlling the air supply to the cylinder 50 is preferably timed to provide about a 100 millisecond delay past dead center position of cylinder 50 after which it is actuated to pressurize the base end of cylinder 50 and to vent its rod end. This causes the sampler 28 to come to rest in its original position because of the bucking action of the cylinders 50 and 51 (See FIGURES 5f(1) and (2)). This completes the cycle. Of course, the modulator 60 is lowered so that the belt 20 returns to its unmodulated condition.

As is apparent, the described construction results in substantial forces on the sampler 28 to effect rapid acceleration and slows and positions the sampler 28 without need for stops, brakes or clutches.

By way of example, several advantages of the present invention may be illustrated in the context of a belt conveyor moving at a rate of about 550 feet per minute conveying approximately 1200 tons of coal per hour with the largest expected lump size being about 2 inches in diameter. The conveyor belt has a width of 42 inches and carries a 36 inch wide stream of coal.

The width between the side plates of the sampler 28 is about six inches since for adequate sampling, it should be at least three times the largest size encountered.

In accordance with the present invention, the sampler may be accelerated to a velocity of 180 inches per second or more by the time it impacts the bulk material on the belt. The resulting traversal of the modulated belt is achieved in a small fraction of a second to remove the sample increment. The sample obtained is an acceptably representative sample according to ASTM Type I condition B criteria for coal applications.

While the features of the present invention as herein shown and described are especially adapted for taking cross-stream increment samples of bulk material from a moving conveyor belt, it is clear that the invention finds utility as well in obtaining such samples from stopped conveyor belts. However, the provision for obtaining samples from a moving belt enables an uninterrupted flow of bulk material to ultimate processing steps offering significant advantages over previously used sampling techniques. For example, the invention avoids the need for surge capacity in the conveying line and reduces wear and tear on the machinery and associated components attendant repeated start and stop cycling. The invention also eliminates the prior practice of conducting a side stream of the bulk material away from the main stream so that samples may be taken from the side stream, because the sampling unit may be incorporated into the main conveyor.

## Claims

1. A method of controlling and rotating a sample sweep (28) in a sampler (26) for removing a cross-stream increment of material from an elongate conveyor belt (20) having drive means (23) for imparting longitudinal movement thereto at a desired velocity,
said sample sweep (28)
being mounted adjacent the belt (20) for rotation about a rotative axis (33) so as to pass through the material on the belt, and
being connected to and rotatable about the axis by a pair of cranks (44, 45), and
having a pair of double-acting pneumatic cylinders (50, 51) each connected to one of said cranks (44, 45) for imparting a force to the same to cause it to rotate the sweep (28),
valve means (68, 69) being arranged for alternately pressurizing and venting chambers of each cylinder (50, 51)
the sweep (28) being controlled and rotated
by pressurizing a selected chamber of each cylinder (50, 51) to provide balancing forces to hold the sweep in a predetermined ready position,
by thereafter alternately pressurizing and venting selected chambers of the cylinders (50, 51) to provide forces to rotate the sweep (28) through an arcuate path which passes through the body of material to be sampled to remove the cross-stream increment of material from the belt (20), and
by thereafter pressurizing selected chambers of the cylinders (50, 51) to return said sweep (28) to ready position.

2. A method according to Claim 1 further comprising modulating the belt (20) and supporting and conforming the belt to the arcuate path of the sweep (28) so that the sweep moves in close proximity to the upper surface of the belt (20) and removes a cross-stream increment from the belt as it moves through its arcuate path across the belt.

3. A method according to Claim 1 or 2, wherein the belt (20) is modulated and is supported and conformed to the arcuate path of the sweep (28) by lifting the belt (20) to a position closely adjacent the arcuate path using a lifter (61) that has an arcuate surface (66) contacting the lower surface of the belt (20) with a radius corresponding substantially to the radius of the arc described by the arcuate path of the sweep (28) as it moves across the belt (20).

4. A method according to Claim 1, 2 or 3, wherein the conveyor belt (20) is supported in a trough-like configuration, and wherein, after the sweep (28) has passed through the body of material, a selected chamber in one of said cylinders (50, 51) is pressurized momentarily to oppose the force of the chamber in the other cylinder (50, 51) to decelerate said sweep (28) and eject material from the sweep.

5. A method according to Claim 4 further comprising modulating the normal troughing of the belt (20) and supporting and conforming the belt to the arcuate path of the sweep (28) so that the sweep moves in close proximity to the upper surface of the modulated belt (20) and removes a cross-stream increment from the belt as it moves through its arcuate path across the belt.

6. A method according to any of Claims 1 to 5, wherein the conveyor belt (20) is moving longitudinally with the material supported thereon as the sweep (28) is rotated across the belt to remove the cross-stream increment.

## Patentansprüche

1. Verfahren zum Steuern und Drehen eines Probenräumers (28) in einem Probennehmer (26) zum Entnehmen einer Stromquerschnittsprobe eines Materials von einem langgestreckten Förderband (20), welches Antriebsmittel (23) aufweist, um ihm eine Bewegung in seiner Längsrichtung mit einer gewünschten Geschwindigkeit zu geben,
wobei der Probenräumer (28)
- an das Band (20) angrenzend zur Rotation um eine Drehachse (33) angebracht ist, so daß er sich durch das Material auf dem Band bewegt, und
- mit einem Paar von Kurbeln (44,45) verbunden ist und durch diese um die Achse drehbar ist, und
- ein Paar von doppeltwirkenden Pneumatikzylindern (50,51) aufweist, wobei jeder mit einer der Kurbeln (44,45) verbunden ist, um auf diese eine Kraft zu übertragen, so daß sie den Räumer (28) dreht,
wobei Ventilmittel (68,69) zum alternierenden Unter-Druck-Setzen und Entlüften von Kammern jedes Zylinders (50,51) angeordnet sind,
wobei der Räumer (28) gesteuert und gedreht wird
- durch Unter-Druck-Setzen einer ausgewählten Kammer jedes Zylinders (50,51), um ausgleichende Kräfte zum Halten des Räumers in einer vorbestimmten Bereitschaftsstellung vorzusehen,
- durch darauffolgendes alternierendes Unter-Druck-Setzen und Entlüften ausgewählter Kammern von jedem der Zylinder (50,51), um Kräfte zum Drehen des Räumers (28) durch einen bogenförmigen Weg vorzusehen, welcher durch den Körper des zu entnehmenden Materials geht, um die Stromquerschnittsprobe des Materials von dem Band (20) zu entfernen, und
- durch darauffolgendes Unter-Druck-Setzen ausgewählter Kammern der Zylinder (50,51), um den Räumer (28) in die Bereitschaftsstellung zurückzuführen.

2. Verfahren nach Anspruch 1, ferner umfassend das Modulieren des Bands (20) und Tragen und Anpassen des Bands an den bogenförmigen weg des Räumers (28), so daß der Räumer sich nahe der oberen Oberfläche des Bands (20) bewegt und eine Stromquerschnittsprobe von dem Band entfernt, wenn er sich durch seinen bogenförmigen Weg über das Band bewegt.

3. Verfahren nach Anspruch 1 oder 2, worin das Band (20) moduliert wird und getragen und an den bogenförmigen Weg des Räumers (28) angepaßt wird, indem das Band (20) in eine Position nahe an den bogenförmigen Weg angrenzend unter Verwendung eines Hebers (61) angehoben wird, welcher eine bogenförmige, die untere Oberfläche des Bands (20) berührende Oberfläche (66) mit einem Radius aufweist, der im wesentlichen dem Radius des Bogens entspricht, welcher durch den bogenförmigen weg des Räumers (28) beschrieben wird, wenn dieser sich über das Band (20) bewegt.

4. Verfahren nach Anspruch 1, 2 oder 3, worin das Förderband (20) in einer trogartigen Konfiguration getragen wird, und worin, nachdem der Räumer (28) sich durch den Körper des Materials bewegt hat, eine ausgewählte Kammer in einem der Zylinder (50,51) kurzzeitig unter Druck gesetzt wird, um der Kraft in der Kammer in dem anderen Zylinder (50,51) entgegenzuwirken, um den Räumer (28) abzubremsen und Material von dem Räumer auszustoßen.

5. Verfahren nach Anspruch 4, ferner umfassend das Modulieren der normalen Trogform des Bands (20) und das Tragen und Anpassen des Bands an den bogenförmigen weg des Räumers (28), so daß der Räumer sich nahe an der oberen Oberfläche des modulierten Bands (20) bewegt und eine Stromquerschnittsprobe von dem Band entfernt, wenn er sich durch seinen bogenförmigen weg über das Band bewegt.

6. Verfahren nach einem der Ansprüche 1 bis 5, worin das Förderband (20) sich mit dem darauf getragenen Material in Längsrichtung bewegt, wenn der Räumer (28) über das Band gedreht wird, um die Stromquerschnittsprobe zu entnehmen.

## Revendications

1. Procédé de commande et d'entraînement en rotation d'une palette d'échantillon (28) dans un dispositif de prélèvement d'échantillon (26) destiné à enlever un incrément transversal de matière d'une bande transporteuse allongée (20) ayant des moyens d'entraînement (23) destinés à lui impartir un mouvement longitudinal à une vitesse souhaitée,
ladite palette d'échantillon (28)
étant montée de façon adjacente à la bande (20) pour rotation autour d'un axe de rotation (33) de façon à passer à travers la matière sur la bande, et
étant reliée à et pouvant tourner autour de l'axe grâce à une paire de manivelles (44, 45), et
ayant une paire de vérins pneumatiques à double-effet (50, 51) reliés chacun à une desdites manivelles (44, 45) afin d'impartir une force à celle-ci de façon à l'amener à faire tourner la palette (28),
des moyens de soupape (68, 69) étant prévus afin de mettre alternativement sous pression et à l'air libre les chambres de chaque vérin (50, 51),
la palette (28) étant commandée et entraînée en rotation
en mettant sous pression une chambre sélectionnée de chaque vérin (50, 51) afin de procurer des forces d'équilibrage destinées à maintenir la palette dans une position prête prédéterminée,
en mettant ensuite alternativement sous pression et à l'air libre des chambres sélectionnées des vérins (50, 51) afin de procurer des forces destinées à faire tourner la palette (28) sur une trajectoire courbée en arc qui passe à travers la masse de matière devant être échantillonnée de façon à enlever l'incrément transversal de matière de la bande (20), et
en mettant ensuite sous pression les chambres sélectionnées des vérins (50, 51) afin de ramener ladite palette (28) dans la position prête.

2. Procédé selon la revendication 1, comportant en outre le fait de moduler la bande (20) et de supporter et conformer la bande suivant la trajectoire courbée en arc de la palette (28) de telle sorte que la palette se déplace à proximité rapprochée de la surface supérieure de la bande (20) et enlève un incrément transversal de la bande lorsqu'elle se déplace sur sa trajectoire courbée en arc transversalement à la bande.

3. Procédé selon la revendication 1 ou 2, selon lequel la bande (20) est modulée et est supportée et conformée suivant la trajectoire courbée en arc de la palette (28) en soulevant la bande (20) vers une position parfaitement adjacente à la trajectoire courbée en arc en utilisant un dispositif de levage (61) qui a une surface courbée en arc (66) en contact avec la surface inférieure de la bande (20) avec un rayon correspondant sensiblement au rayon de l'arc décrit par la trajectoire courbée en arc de la palette (28) lorsqu'elle se déplace transversalement à la bande (20).

4. Procédé selon la revendication 1, 2 ou 3, selon lequel la bande transporteuse (20) est supportée avec une configuration en auge, et selon lequel, une fois que la palette (28) est passée à travers la masse de matière, une chambre sélectionnée de l'un desdits vérins (50, 51) est mise momentanément sous pression afin de s'opposer à la force de la chambre de l'autre vérin (50, 51) de façon à ralentir ladite palette (28) et éjecter la matière de la palette.

5. Procédé selon la revendication 4, comportant en outre le fait de moduler la forme en auge normale de la bande (20) et de supporter et conformer la bande suivant la trajectoire courbée en arc de la palette (28) de telle sorte que la palette se déplace à proximité rapprochée de la surface supérieure de la bande modulée (20) et enlève un incrément transversal de la bande lorsqu'elle se déplace suivant sa trajectoire courbée en arc transversalement à la bande.

6. Procédé selon l'une quelconque des revendications 1 à 5, selon lequel la bande transporteuse (20) se déplace longitudinalement avec la matière supportée dessus lorsque la palette (28) est entraînée en rotation transversalement à la bande afin d'enlever l'incrément transversal.
